# FASCICULE DE BREVET EUROPEEN

(11) **EP 1 799 983 B1**
(45) Date de publication et mention de la délivrance du brevet: **26.03.2008**
(21) Numéro de dépôt: 05810701.2
(22) Date de dépôt: 05.10.2005
(51) Int. Cl.: F02B 77/08, G05B 13/02, F02B 37/00

(54) **PROCEDE ET SYSTEME AMELIORES D'ESTIMATION D'UNE TEMPERATURE DES GAZ D'ECHAPPEMENT ET MOTEUR A COMBUSTION INTERNE EQUIPE D'UN TEL SYSTEME**
VERBESSERTES VERFAHREN UND SYSTEM ZUR SCHÄTZUNG DER ABGASTEMPERATUR UND VERBRENNUNGSMOTOR MIT EINEM SOLCHEN SYSTEM
IMPROVED METHOD AND SYSTEM FOR ESTIMATING EXHAUST GAS TEMPERATURE AND INTERNAL COMBUSTION ENGINE EQUIPPED WITH SUCH A SYSTEM

(30) Priorité: 06.10.2004 FR 0410523
(43) Date de publication de la demande: 27.06.2007
(73) Titulaire: RENAULT S.A.S., 92100 Boulogne Billancourt (FR)
(72) Inventeur: BARILLON, Pascal, F-92130 ISSY-LES-MOULINEAUX (FR); GAUVIN, Fabrice, F-91540 MENNECY (FR); LUCEA, Marc, F-75010 PARIS (FR); POILANE, Emmanuel, F-91290 ARPAJON (FR)
(86) Numéro de dépôt international: PCT/FR2005/050811
(87) Numéro de publication internationale: WO 2006/037926

(56) Documents cités:
- EP-A- 1 024 260
- EP-A- 1 041 264
- EP-A- 1 357 487
- WO-A-96/05421
- US-A- 5 832 421
- US-B1- 6 401 457

## Description

Le domaine de l'invention est celui du pilotage de moteur à combustion interne, et plus particulièrement des dispositifs d'échappement montés en aval du collecteur d'échappement du moteur.

L'invention concerne plus précisément un procédé et un système d'estimation d'une température des gaz d'échappement, ainsi qu'un moteur à combustion interne et qu'un véhicule équipés d'un tel système.

Pour répondre aux émissions de gaz polluants des véhicules automobiles, des systèmes de post-traitement des gaz sont généralement disposés dans la ligne d'échappement des moteurs.

Ces systèmes sont prévus pour réduire aussi bien les émissions du monoxyde de carbone, des hydrocarbures imbrûlés que celles des particules et des oxydes d'azote.

Certains de ces systèmes fonctionnent de manière discontinue ou alternative en ce sens qu'ils alternent des phases de stockage des polluants et des phases de régénération des pièges (c'est-à-dire de conversion des polluants stockés en substances non polluantes).

Afin d'optimiser le traitement de l'ensemble des polluants, il est nécessaire de contrôler au mieux ces phases de stockage et de régénération. Il est notamment nécessaire d'estimer au cours du temps les masses piégées (c'est-à-dire les particules dans le cas du filtre à particule, les oxydes d'azote dans le cas du piège à oxydes d'azote).

De même, il est nécessaire de connaître l'évolution au cours du temps des masses converties lors des phases de régénération.

Or l'évolution de ces masses lors des phases de stockage et/ou de régénération dépend directement de la température du support de ces pièges et des gaz qui les traversent. On cherche donc à connaître, sinon à contrôler, la température des gaz qui pénètrent dans ces pièges.

Par ailleurs, l'augmentation de la complexité des moteurs et de leurs modes de fonctionnement nécessite des moyens de gestion électronique de plus en plus sophistiqués et par là même, des moyens de mesure ou d'estimation de plus en plus nombreux. Mais il s'avère que de nombreuses grandeurs physiques ne sont pas directement mesurables, ou que les capteurs nécessaires sont trop chers voire inadaptés.

Il apparaît donc nécessaire, pour la commande de la régénération des pièges et pour la commande du moteur proprement dit, de connaître la température des gaz d'échappement du moteur. L'obtention d'une estimation précise de la température des gaz d'échappement en entrée d'un système de post-traitement disposé en aval de la turbine d'un moteur suralimenté peut ainsi s'avérer particulièrement utile.

Pour connaître la température des gaz en amont d'un dispositif de traitement physique et/ou chimique des gaz d'échappement, on a recours aujourd'hui soit à un capteur de température, soit à un modèle d'estimation de cette température mis en oeuvre par un calculateur électronique embarqué.

Plusieurs inconvénients sont toutefois liés à l'utilisation d'un capteur placé dans la ligne d'échappement.

La précision d'un capteur est en effet inversement proportionnelle au champ d'utilisation. C'est à dire que plus on souhaite mesurer la température sur une large plage d'utilisation, plus la précision de mesure est médiocre. Cette précision peut par ailleurs dériver avec le vieillissement thermique ou l'encrassement du capteur.

De plus, le coût d'utilisation d'un capteur peut s'avérer important. Il faut effectivement associer au coût intrinsèque au capteur celui de la connectique, du port d'entrée dans le calculateur et du pilote logiciel.

Par ailleurs, il s'avère également nécessaire de disposer de moyens adaptés pour diagnostiquer l'état de fonctionnement du capteur.

L'utilisation de modèles présente également des inconvénients. Si ces modèles sont généralement fidèles en régime de gaz permanent, ils s'avèrent plutôt médiocres en régime transitoire. De plus, de nombreux paramètres (paramètres physiques, variables d'état) nécessaires à ces modèles sont difficilement identifiables ou mesurables sur moteur.

En outre, ces modèles sont la plupart du temps trop « gourmands » en terme de charge de calcul ou de ressource mémoire pour pouvoir être implémentés dans un calculateur de gestion électronique moteur.

Une autre solution a été proposée qui consiste à estimer la température des gaz d'échappement en mettant en oeuvre un réseau de neurones statique. On pourra ainsi se référer à la demande de brevet français de la Demanderesse déposée le 19 décembre 2003 sous le n° FR 03 15112.

La solution décrite dans ce document ne permet toutefois qu'une prise en compte partielle de l'historique du système. L'estimation ainsi réalisée de la température, à la fois en régime permanent et en régime dynamique, est alors peu précise.

La présente invention a pour objectif d'améliorer la connaissance d'une température des gaz d'échappement, et en particulier de la température en amont d'un dispositif de traitement physique et/ou chimique des gaz d'échappement.

A cet effet, l'invention propose un procédé d'estimation d'une température des gaz d'échappement d'un moteur, caractérisé en ce qu'il met en oeuvre un estimateur à réseau de neurones disposant d'une boucle de rétroaction retournant directement ou indirectement en entrée du réseau une ou plusieurs des grandeurs disponibles en sortie du réseau.

Certains aspects préférés, mais non limitatifs du procédé selon l'invention sont les suivants :
- on fournit en entrée de l'estimateur une information relative à la température des gaz en amont de la turbine disposée sur la ligne d'échappement du moteur, l'estimateur fournissant en sortie l'estimation de la température des gaz d'échappement en aval de ladite turbine ;
- le procédé peut mettre en oeuvre un post-traitement de l'estimation de température réalisée par le réseau de neurones ;
- le procédé peut réaliser une rétroaction de la température estimée, disponible en sortie du module de post traitement ;
- le procédé peut mettre en oeuvre un prétraitement d'une ou plusieurs des variables en entrée de l'estimateur en réalisant des calculs basés sur des relations physiques connues ;
- le procédé peut mettre en oeuvre un retraitement de certaines des grandeurs en sortie du réseau avant que celles-ci ne soient retournées, selon un rebouclage ainsi dit indirect, vers l'entrée du réseau ;
- le procédé peut comporter une étape préalable d'apprentissage de l'estimateur à l'aide d'une base de données représentatives de zones de fonctionnement intéressantes.

Selon un autre aspect, l'invention concerne un système d'estimation d'une température des gaz d'échappement d'un moteur, caractérisé en ce qu'il comporte un estimateur à réseau de neurones disposant d'une boucle de rétroaction retournant directement ou indirectement en entrée du réseau une ou plusieurs des variables de sortie du réseau.

Selon encore d'autres aspects, l'invention concerne un moteur à combustion interne ainsi qu'un véhicule automobile équipés d'un système d'estimation d'une température des gaz d'échappement selon l'invention.

D'autres aspect, buts et avantages de l'invention apparaîtront à la lecture de la description détaillée suivante de formes de réalisation préférées de celle-ci, donnée à titre d'exemple non limitatif et faite en référence aux dessins annexés sur lesquels :
- la figure 1 est une vue schématique d'un moteur à combustion interne selon un aspect de l'invention ;
- la figure 2 est une vue schématique d'un système d'estimation d'une température de gaz d'échappement selon un aspect de l'invention ;
- la figure 3 est un diagramme montrant les étapes du procédé d'estimation d'une température de gaz d'échappement selon un aspect de l'invention.

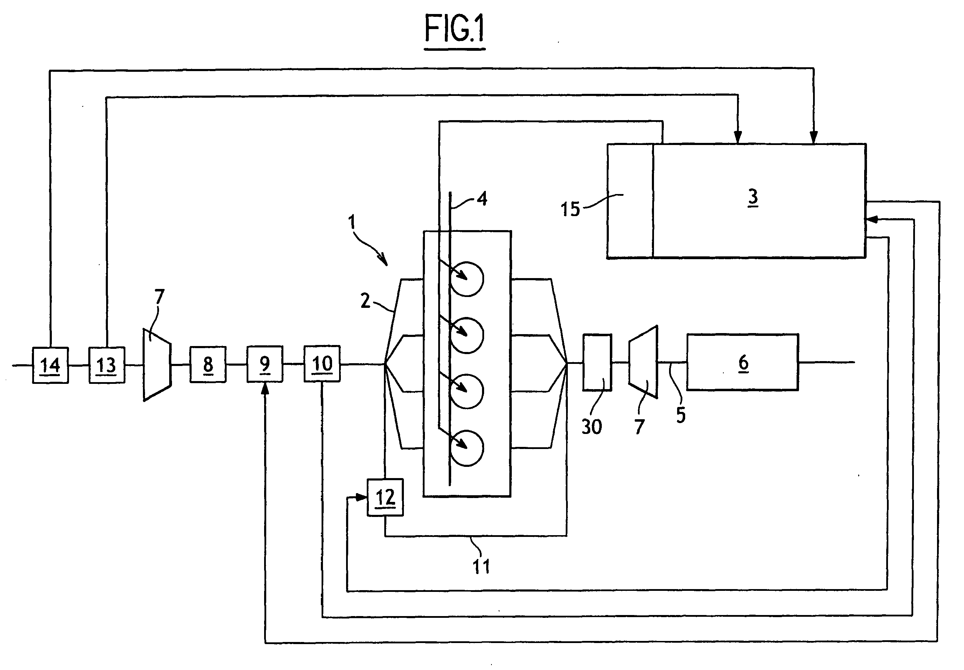

Sur la figure 1, seuls les éléments nécessaires à la compréhension de l'invention ont été représentés. Un moteur à combustion interne 1 est destiné à équiper un véhicule tel qu'une automobile. Le moteur 1 est par exemple un moteur Diesel suralimenté par turbocompresseur à quatre cylindres en ligne et injection directe de carburant. Le moteur 1 comprend un circuit d'admission 2 assurant son alimentation en air, un calculateur 3 de contrôle moteur, un circuit de carburant sous pression 4, et une ligne d'échappement 5 des gaz. L'injection du carburant dans les cylindres est assurée par des injecteurs, non représentés, débouchant dans les chambres de combustion et pilotés par le calculateur 3 à partir du circuit 4.

En sortie du moteur 1, les gaz d'échappement évacués dans la ligne d'échappement 5 traversent un ou plusieurs dispositifs de post-traitement 6 (par exemple filtre à particules, filtre à oxydes d'azote). Un turbocompresseur 7 comprend un compresseur disposé sur le circuit d'admission 2 et une turbine disposée sur la ligne d'échappement 5. Entre le compresseur et le moteur 1, le circuit d'admission 2 comprend un échangeur thermique 8 permettant de refroidir l'air comprimé à la sortie du compresseur et d'accroître ainsi sa masse volumique, un volet d'admission d'air 9 commandé par le calculateur 3, et un capteur de pression 10 relié au calculateur 3.

En sortie du moteur 1, en amont de la turbine, la ligne d'échappement 5 comporte en outre des moyens 30 adaptés pour fournir une information relative à la température des gaz d'échappement en amont de la turbine. Lesdits moyens 30 sont par exemple constitués par une sonde de mesure de température ou encore par un estimateur prévu pour fournir une estimation de ladite température des gaz en amont de la turbine.

Le moteur 1 comprend également un circuit de recyclage de gaz d'échappement 11 équipé d'une vanne 12 dont l'ouverture est pilotée par le calculateur 3 ; on peut ainsi réintroduire des gaz d'échappement dans le circuit d'admission 2. Un debitmètre d'air 13 est monté dans le circuit d'admission 2 en amont du compresseur pour fournir au calculateur 3 des informations relatives au débit de l'air d'admission alimentant le moteur. Des capteurs 14, par exemple de pression ou de température, peuvent également être prévus.

Le calculateur 3 comprend, de façon classique, un microprocesseur ou unité centrale, des zones mémoires, des convertisseurs analogiques/numériques et différentes interfaces d'entrée et de sortie. Le microprocesseur du calculateur comprend des circuits électroniques et les logiciels appropriés pour traiter les signaux en provenances des différents capteurs, en déduire les états du moteur et générer les signaux de commande appropriés à destination des différents actionneurs pilotés tels que les injecteurs.

Le calculateur 3 commande ainsi la pression du carburant dans le circuit 4 et l'ouverture des injecteurs, et ce, à partir des informations délivrées par les différents capteurs et en particulier de la masse d'air admise, du régime moteur, ainsi que d'étalonnages mémorisés permettant d'atteindre les niveaux de consommation et de performance souhaités.

Le calculateur 3 comprend en outre un estimateur 15 à réseaux de neurones prévu pour réaliser une estimation de la température des gaz d'échappement en amont du ou des dispositifs de post-traitement.

Pour des raisons de simplicité et de partage d'un certain nombre de ressources, notamment de calcul et de mémoire, il est particulièrement avantageux de disposer l'estimateur 15 au sein du calculateur 3.

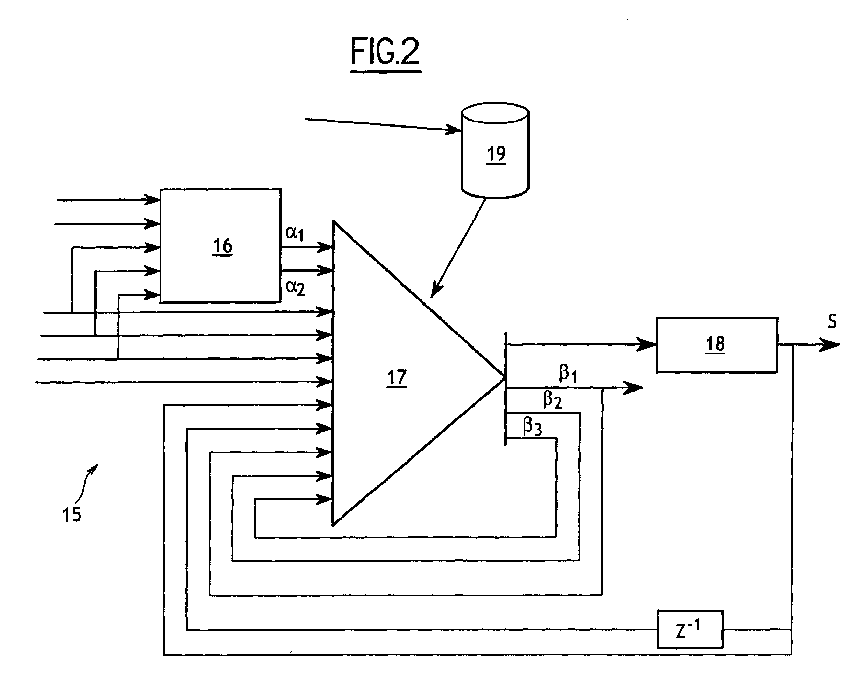

Comme cela est illustré sur la figure 2, l'estimateur 15 comprend un module de pré-traitement 16, un réseau de neurones 17 et un module de post-traitement 18. L'estimateur 15 comporte en outre une boucle de rétroaction prévue pour retourner en entrée du réseau de neurones une ou plusieurs des variables en sortie dudit réseau.

L'estimateur 15 comprend par ailleurs une entrée relative à l'information relative à la température des gaz d'échappement en amont de la turbine, telle que fournie par exemple par les moyens 30.

L'estimateur peut également comporter une ou plusieurs autres entrées relatives à des grandeurs physiques représentatives d'état du moteur, telles que par exemple :
- le débit des gaz,
- la pression des gaz en amont de la turbine,
- la contre-pression des gaz en aval de la turbine,
- la position des ailettes du turbocompresseur,
- la vitesse du véhicule,
- la température de l'air ambiant,
- la position de la vanne de recyclage des gaz d'échappement,
- la pression de suralimentation mesurée par le capteur de pression disposé en aval du compresseur, de l'échangeur thermique et du volet d'admission d'air,
- la température de l'air dans le circuit d'admission.

L'estimateur peut également recevoir en entrée le régime du moteur, le débit de carburant, le débit d'air.

Le réseau de neurones 17 est constitué d'un certain nombre de neurones définis par leurs paramètres (poids, biais), et par leurs fonctions d'activation. La sortie s d'un neurone est liée aux entrées (e₁, e₂, ..., eₙ) du neurone par s = F (e₁*w₁+ e₂*w₂+...+eₙ*wₙ + b), où F est la fonction d'activation du neurone, w₁, w₂, ...wₙ les poids et b le biais.

Le nombre de neurones du réseau, les valeurs des poids et des biais des différents neurones sont des paramètres susceptibles de calibration qui peuvent en particulier être déterminés lors d'une phase d'apprentissage qui sera décrite plus en avant par la suite.

Le module de pré-traitement 16 permet de traiter une ou plusieurs des variables en entrée de l'estimateur en réalisant des calculs basés sur des relations physiques connues. Le module de pré-traitement 16 permet en particulier de réduire le nombre d'entrées du réseau de neurones 17 en calculant une ou plusieurs variables α₁, α₂ chacune représentative d'une ou plusieurs grandeur(s) physique(s), mesurable(s) ou non, absente(s) en entrée du calculateur 3, à partir de plusieurs variables d'entrée. Le module 16 permet aussi de filtrer certaines entrées susceptibles de prendre des valeurs aberrantes.

Le réseau de neurones 17 dispose d'une voie de sortie relative à l'estimation de température désirée, ainsi qu'éventuellement une ou plusieurs autres voies de sorties relatives à des grandeurs d'état non mesurables destinées à être rebouclées, directement ou indirectement, vers l'entrée du réseau 17.

Le module de post-traitement 18 permet de traiter l'estimation de température disponible en sortie du réseau de neurones 17 pour émettre un signal S de température estimée en sortie de l'estimateur, à disposition du calculateur 3. Ce traitement peut être par exemple un filtrage permettant de rendre l'estimateur robuste en limitant le retour vers l'entrée d'une donnée aberrante.

Comme mentionné précédemment, une ou plusieurs des variables en sortie dudit réseau suivent une boucle de rétroaction et sont retournées en entrée du réseau de neurones.

Certaines des variables en sortie du réseau peuvent être traitées (par exemple filtrées, retardées ou associées à d'autres entrées dans le module de pré-traitement) avant d'être retournées en entrée du réseau.

En référence à la figure 2, on a ainsi illustré le cas où des grandeurs d'état β₁, β₂, β₃ (non mesurables et connues uniquement lors de l'apprentissage) disponibles en sortie du réseau 17 sont rebouclées vers l'entrée dudit réseau 17.

On a aussi illustré le cas où la sortie S de l'estimateur (c'est-à-dire l'estimation de la température en aval de la turbine disposée sur la ligne d'échappement des gaz) disponible en sortie du module de post-traitement 18 (et dont la valeur est ici mesurable lors de l'apprentissage) est d'une part rebouclée directement vers l'entrée du réseau 17, et d'autre part rebouclée après avoir été retardée (cf. retardateur représenté par le symbole z⁻¹) vers l'entrée du réseau 1.

En mettant en oeuvre une telle rétroaction d'une ou plusieurs des variables en sortie du réseau de neurones, ledit réseau utilise en entrée de sa fonction d'estimation une ou plusieurs des valeurs prédites aux pas de calculs précédents par cette même fonction d'estimation, et cela que ces valeurs aient été ou non mesurées lors de la phase d'apprentissage.

Un tel rebouclage de rétroaction présente l'avantage de permettre la prise en compte de phénomènes fortement dynamiques.

L'utilisation de fonctions d'activation non linéaires dans le réseau de neurones permet en outre la prise en compte de phénomènes non linéaires.

Le réseau de neurones 17 peut ainsi être qualifié de récurrent ou dynamique, et diffère à ce propos de la solution à réseau statique exposée dans la demande de brevet français n° FR 03 15112 dont il a été fait état précédemment.

L'estimateur 15 permet finalement d'obtenir une estimation de la température en aval de la turbine et en amont d'un dispositif de post-traitement. L'estimateur peut ainsi être vu comme mettant en oeuvre une fonction de transfert prenant en entrée une information relative à la température en amont de la turbine, ainsi qu'éventuellement une ou plusieurs autres informations relatives notamment à des grandeurs physiques, pour fournir en sortie l'estimation de température désirée.

La description ci-après concerne la conception et l'apprentissage de l'estimateur 15.

Une fois l'estimateur élaboré et implémenté par exemple dans le logiciel de gestion électronique du moteur, il s'agit de choisir le réseau de neurones, notamment en déterminant le nombre de neurones et en calibrant les paramètres (poids, biais).

L'apprentissage du réseau de neurones peut être réalisé sur ordinateur à partir de données collectées sur véhicule.

Le réseau de neurones peut faire l'objet d'un apprentissage par une méthode d'algorithme d'apprentissage, notamment à l'aide d'une base de données 19.

La base de données 19 peut être alimentée à partir de résultats d'essais réels sur piste d'un véhicule avec des essais à différents rapports de boîte de vitesses, avec différentes accélérations et décélérations, le tout étant choisi pour être représentatif des conditions normales de fonctionnement du véhicule. En outre, on pourra prévoir de scinder la base de données alimentée à partir des essais sur piste en une base d'apprentissage et en une base de tests, de façon à réduire la taille de la base de données 19 qui forme la base d'apprentissage. Les paramètres (ou calibrations) déterminés lors de la phase d'apprentissage peuvent être stockés dans la mémoire du calculateur 3. Alternativement, la base de données 19 est une base distincte du véhicule, utilisée lors d'opérations d'initialisation du véhicule ou encore lors d'opérations de maintenance.

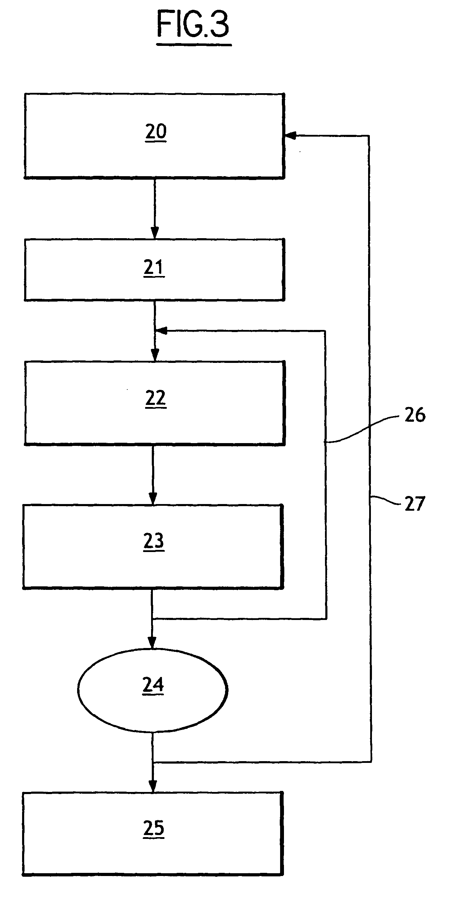

Sur la figure 3, sont illustrées les étapes de conception et d'apprentissage de l'estimateur à réseau de neurones.

A l'étape 20, on effectue des essais permettant de générer les données pour renseigner la base de données 19 (cf. flèche à destination de la base 19 sur la figure 2), les données étant représentatives de zones de fonctionnement intéressantes. Il s'agit effectivement de parcourir de manière représentative l'espace de variation (ou tout du moins une partie) des entrées et sorties de l'estimateur.

Il peut être utile d'effectuer un nettoyage des données, par traitement du signal, par exemple pour supprimer les points aberrants, pour supprimer les points redondants, pour re-synchroniser ou pour filtrer les données.

À l'étape 21, on découpe les données en deux parties pour former une base de tests et une base d'apprentissage. À l'étape 22, on détermine les pré-traitements devant être exécutés par le module de pré-traitement 16 et le réseau de neurones 17 effectue les apprentissages à partir de la base de données d'apprentissage. À l'étape 23, on teste la performance avec un ou plusieurs critères de validation, sur la base de test et sur la base d'apprentissage. À l'étape 24, on effectue le choix du réseau de neurones 17 et à l'étape 25, on effectue les caractérisations des performances et de tests sur le véhicule.

La flèche issue de la base 19 sur la figure 2 illustre de quelle manière les données de la base 19 sont utilisées pour l'apprentissage et la validation de l'estimateur 15.

Entre les étapes 23 et 24, il peut être prévu un rebouclage 26 permettant de remonter à l'amont de l'étape 22 pour effectuer un certain nombre d'itérations avec des modifications éventuelles sur le nombre de neurones, les entrées, les sorties, le découpage en nombre de réseaux, l'architecture du ou des réseaux de neurones 17, le type d'apprentissage, les critères d'optimisation, etc.

Ce processus itératif (rebouclage 26) permet d'élaborer l'estimateur souhaité (précision, robustesse), à moindre coût (nombre d'entrées, nombre de calculs, nombre et difficulté des essais, etc.).

Entre les étapes 24 et 25, il peut être prévu un rebouclage 27 lorsqu'il s'avère que les données générées à l'étape 20 sont insuffisantes. On repasse alors à l'étape 20 pour générer de nouvelles données appelées à remplacer les données précédemment acquises ou à les compléter afin d'établir un nombre de points de mesure suffisant.

À titre d'exemple, on peut prévoir 5000 points de mesure dans la base d'apprentissage.

Lors de l'étape 23 de test, on peut prévoir des critères de choix pour sélectionner le jeu de paramètres permettant l'estimation la plus précise (par exemple en supprimant des points dont l'erreur est supérieure à 50°C, en recherchant une moyenne d'erreur proche de 5°C, ou encore en recherchant une erreur moyenne glissante faible).

Finalement, la mise en oeuvre de l'invention pour l'estimation de la température des gaz d'échappement est peu consommatrice des ressources du calculateur (charge de calcul, mémoire nécessaire), utilise un nombre restreint de paramètres, et peut ainsi être facilement implémentée.

De plus, dès lors que la base de données utile à l'apprentissage est suffisamment représentative de l'ensemble des conditions d'utilisation ultérieures, la température des gaz en sortie de la turbine ou en amont du système de post-traitement peut être estimée avec précision (de l'ordre de quelques degrés), et cela que ce soit en régime permanent ou transitoire.

## Revendications

1. Procédé d'estimation d'une température des gaz d'échappement d'un moteur (1), **caractérisé en ce qu'**il met en oeuvre un estimateur (15) à réseau (17) de neurones disposant d'une boucle de rétroaction retournant directement ou indirectement en entrée du réseau une ou plusieurs des grandeurs disponibles en sortie du réseau.

2. Procédé selon la revendication précédente, **caractérisé en ce qu'**on fournit en entrée de l'estimateur (15) une information relative à la température des gaz en amont de la turbine (7) disposée sur la ligne d'échappement (5) du moteur, l'estimateur fournissant en sortie l'estimation de la température des gaz d'échappement en aval de ladite turbine.

3. Procédé selon l'une des revendications précédentes, **caractérisé en ce qu'**il met en oeuvre un post-traitement de l'estimation de température réalisée par le réseau de neurones.

4. Procédé selon la revendication précédente, **caractérisé en ce qu'**on réalise une rétroaction de la température (S) estimée, disponible en sortie du module de post traitement.

5. Procédé selon l'une des revendications précédentes, **caractérisé en ce qu'**il met en oeuvre un prétraitement d'une ou plusieurs des variables en entrée de l'estimateur en réalisant des calculs basés sur des relations physiques connues.

6. Procédé selon l'une des revendications précédentes, **caractérisé en ce qu'**il met en oeuvre un retraitement de certaines des grandeurs en sortie du réseau avant que celles-ci ne soient retournées, selon un rebouclage ainsi dit indirect, vers l'entrée du réseau.

7. Procédé selon l'une des revendications précédentes, **caractérisé en ce qu'**il comporte une étape préalable d'apprentissage de l'estimateur à l'aide d'une base de données (19) représentatives de zones de fonctionnement intéressantes.

8. Système d'estimation d'une température des gaz d'échappement d'un moteur (1), **caractérisé en ce qu'**il comporte un estimateur (15) à réseau (17) de neurones disposant d'une boucle de rétroaction retournant directement ou indirectement en entrée du réseau une ou plusieurs des variables de sortie du réseau.

9. Système selon la revendication précédente, **caractérisé en ce que** l'estimateur dispose d'une entrée prévue pour recevoir une information relative à la température des gaz d'échappement en amont de la turbine (7) disposée sur la ligne d'échappement (5) du moteur, l'estimateur fournissant en sortie l'estimation de la température des gaz d'échappement en aval de ladite turbine.

10. Système selon l'une des revendications 8 ou 9, **caractérisé en ce que** l'estimateur comporte un module de post-traitement (18) disposé en aval du réseau de neurones (17) et adapté pour traiter l'estimation de température réalisée par le réseau de neurones.

11. Système selon la revendication précédente, **caractérisé en ce qu'**il comporte une rétroaction de la température (S) estimée, disponible en sortie du module de post traitement.

12. Système selon l'une des revendications 8 à 11, **caractérisé en ce que** l'estimateur comporte un module de prétraitement (16) disposé en amont du réseau de neurones (17) et adapté pour traiter une ou plusieurs des variables en entrée de l'estimateur (15) en réalisant des calculs basés sur des relations physiques connues.

13. Moteur (1) à combustion interne comportant un système d'estimation d'une température des gaz d'échappement selon l'une quelconque des revendications 8 à 12.

14. Véhicule automobile comportant un système d'estimation d'une température des gaz d'échappement selon l'une quelconque des revendications 8 à 12.

## Claims

1. Method for estimating an exhaust gas temperature of an engine (1), **characterized in that** an estimator (15) with a neuronal network (17) is used, provided with a feedback loop returning, directly or indirectly, to the network input, one or more of the quantities available at the network output.

2. Method according to the preceding claim, **characterized in that** data is supplied at the input of the estimator (15), relative to the gas temperature upstream of the turbine (7) placed on the engine exhaust line (5), the estimator supplying, at the output, the estimate of the exhaust gas temperature downstream of said turbine.

3. Method according to one of the preceding claims, **characterized in that** it implements a postprocessing of the temperature estimate made by the neuronal network.

4. Method according to the preceding claim, **characterized in that** a feedback is made of the estimated temperature (S) available at the output of the postprocessing module.

5. Method according to one of the preceding claims, **characterized in that** it implements a preprocessing of one or more of the estimator input variables by making calculations based on known physical equations.

6. Method according to one of the preceding claims, **characterized in that** it implements a reprocessing of some of the quantities at the network output before they are returned, according to a so-to-speak indirect relooping, to the network input.

7. Method according to one of the preceding claims, **characterized in that** it comprises a prior estimator learning step using a database (19) representative of important operating zones.

8. System for estimating an exhaust gas temperature of an engine (1), **characterized in that** it comprises an estimator (15) with a neural network (17) provided with a feedback loop returning, directly or indirectly, one or more of the network output variables to the network input.

9. System according to the preceding claim, **characterized in that** the estimator has an input designed to receive data about the exhaust gas temperature upstream of the turbine (7) placed on the exhaust line (5) of the engine, the estimator supplying, at the output, the estimate of the exhaust gas temperature downstream of said turbine.

10. System according to either of Claims 8 and 9, **characterized in that** the estimator comprises a postprocessing module (18) placed downstream of the neural network (17) and suitable for processing the temperature estimate produced by the neural network.

11. System according to the preceding claim, **characterized in that** it comprises a feedback of the estimated temperature (S), available at the output of the postprocessing module.

12. System according to one of Claims 8 to 11, **characterized in that** the estimator comprises a preprocessing module (16) placed upstream of the neural network (17) and suitable for processing one or more of the input variables of the estimator (15) by making calculations based on known physical equations.

13. Internal combustion engine (1) comprising a system for estimating an exhaust gas temperature according to any one of Claims 8 to 12.

14. Motor vehicle comprising a system for estimating an exhaust gas temperature according to any one of Claims 8 to 12.

## Patentansprüche

1. Verfahren zur Schätzung einer Temperatur der Abgase eines Motors (1), **dadurch gekennzeichnet, dass** es einen Schätzer (15) mit Neuronennetz (17) aufweist, der über eine Rückkopplungsschleife verfügt, die direkt oder indirekt an den Eingang des Netzes eine oder mehrere der am Ausgang des Netzes verfügbaren Größen rückkoppelt.

2. Verfahren nach dem vorhergehenden Anspruch, **dadurch gekennzeichnet, dass** an den Eingang des Schätzers (15) eine Information betreffend die Temperatur der Gase vor der Turbine (7), die auf der Auspuffanlage (5) des Motors angeordnet ist, geliefert wird, wobei der Schätzer am Ausgang die Schätzung der Temperatur der Abgase hinter der Turbine liefert.

3. Verfahren nach einem der vorhergehenden Ansprüche, **dadurch gekennzeichnet, dass** es eine Nachbearbeitung der Temperaturschätzung anwendet, die vom Neuronennetz durchgeführt wird.

4. Verfahren nach dem vorhergehenden Anspruch, **dadurch gekennzeichnet, dass** eine Rückkopplung der geschätzten Temperatur (S) durchgeführt wird, die am Ausgang der Nachbearbeitungsmoduls verfügbar ist.

5. Verfahren nach einem der vorhergehenden Ansprüche, **dadurch gekennzeichnet, dass** es eine Vorverarbeitung einer oder mehrerer der Variablen am Eingang des Schätzers anwendet, indem es Berechnungen durchführt, die auf bekannten physikalischen Beziehungen beruhen.

6. Verfahren nach einem der vorhergehenden Ansprüche, **dadurch gekennzeichnet, dass** es eine Wiederverarbeitung bestimmter der Größen am Ausgang des Netzes anwendet, ehe diese gemäß einer als indirekt bezeichneten Rückkopplung zum Eingang des Netzes zurückgeführt werden.

7. Verfahren nach einem der vorhergehenden Ansprüche, **dadurch gekennzeichnet, dass** es einen vorhergehenden Lernschritt des Schätzers mit Hilfe einer Bank von Daten (19) aufweist, die für interessante Betriebszonen repräsentativ sind.

8. System zur Schätzung einer Temperatur der Abgase eines Motors (1), **dadurch gekennzeichnet, dass** es einen Schätzer (15) mit Neuronennetz (17) aufweist, der über eine Rückkopplungsschleife verfügt, die direkt oder indirekt an den Eingang des Netzes eine oder mehrere der am Ausgang des Netzes verfügbaren Größen rückkoppelt.

9. System nach dem vorhergehenden Anspruch, **dadurch gekennzeichnet, dass** der Schätzer über einen Eingang verfügt, der vorgesehen ist, um eine Information bezüglich der Temperatur der Abgase vor der Turbine (7) zu empfangen, die auf der Auspuffanlage (5) des Motors angeordnet ist, wobei der Schätzer am Ausgang die Schätzung der Abgase hinter der Turbine liefert.

10. System nach einem der Ansprüche 8 oder 9, **dadurch gekennzeichnet, dass** der Schätzer einen Nachbearbeitungsmodul (18) aufweist, der hinter dem Neuronennetz (17) angeordnet und geeignet ist, die vom Neuronennetz' durchgeführte Temperaturschätzung zu bearbeiten.

11. System nach dem vorhergehenden Anspruch, **dadurch gekennzeichnet, dass** es eine Rückkopplung der geschätzten Temperatur (S) aufweist, die am Ausgang des Nachbearbeitungsmoduls verfügbar ist.

12. System nach einem der Ansprüche 8 bis 11, **dadurch gekennzeichnet, dass** der Schätzer einen Vorbearbeitungmodul (16) aufweist, der vor dem Neuronennetz (17) angeordnet und geeignet ist, um eine oder mehrere der Variablen am Eingang des Schätzers (15) zu verarbeiten, indem er auf bekannten physikalischen Beziehungen beruhende Berechnungen durchführt.

13. Verbrennungsmotor (1), der ein System zur Schätzung einer Temperatur der Abgase nach einem der Ansprüche 8 bis 12 aufweist.

14. Kraftfahrzeug, das ein System zur Schätzung einer Temperatur der Abgase nach einem der Ansprüche 8 bis 12 aufweist.
